# EUROPEAN PATENT SPECIFICATION

(11) **EP 2 978 570 B1**
(45) Date of publication and mention of the grant of the patent: **03.05.2017**
(21) Application number: 14721500.8
(22) Date of filing: 24.03.2014
(51) Int. Cl.: B25J 15/06

(54) **A VACUUM MANIPULATION DEVICE AND A METHOD FOR MANIPULATING A COMPONENT BY MEANS OF A VACUUM**
EIN DRUCKHANDHABUNGSVORRICHTUNG UND EIN VERFAHREN FÜR DIE MANIPULATION EINER KOMPONENTE DURCH VAKUUM
DISPOSITIF DE MANIPULATION SOUS VIDE ET PROCEDE DE MANIPULATION D'UN COMPOSANT AU MOYEN D'UN VIDE

(30) Priority: 26.03.2013 IT MI20130451
(43) Date of publication of application: 03.02.2016
(73) Proprietor: Consiglio Nazionale Delle Ricerche, 00185 Roma (IT)
(72) Inventor: RUGGERI, Serena, I-37019 Peschiera del Garda (Verona) (IT); FONTANA, Gianmauro, I-25128 Brescia (IT); FASSI, Irene, I-24128 Bergamo (IT); PAGANO, Claudia, I-11100 Aosta (IT); LEGNANI, Giovanni, I-20145 Milano (IT)
(74) Representative: Vittorangeli, Lucia
(86) International application number: PCT/IB2014/060105
(87) International publication number: WO 2014/155277

(56) References cited:
- US-A1- 2005 108 931
- US-A1- 2012 000 125

## Description

The present invention relates to a vacuum manipulation device. The present invention further relates to a method for manipulating a component. An example of a pick-up and delivery system and associated methods is disclosed in US2012/000125.

In particular, the present invention relates to a device for manipulating components with millimetric or sub-millimetric dimensions (also called microcomponents) or in general a device for manipulating components with geometrical and structural properties such that the forces of adhesion predominate over the force of weight.

This device, known also as a vacuum gripper (or microgripper in the case of microcomponents) is suitable for being fitted, for example, on the terminal member of a manipulator (robot) and has application in various technical fields, including, for example: the automotive, electronics, micromechanical, telecommunications, medical and biomedical industries. However, said device is also suitable for being integrated in a system for manual or teleoperated manipulation of components, such as, for example, a pipette with a suitable grip.

The operation of a vacuum manipulation device is based on the pressure difference between the inside of the manipulation device and the outside. In particular, a vacuum manipulation device essentially consists in a gripper nozzle in communication with a vacuum generating system, and is realized, for example, by means of a suction tube connected at one end with a vacuum generating system. The opposite end is open, defining the suction nozzle for attracting the component to be grasped and manipulated and keeping it adherent thereto as long as the vacuum generating system is activated, and ensures a pressure difference between the inside of the manipulation device and the atmosphere such as to suck the component itself.

The manipulation of a component, particularly where aimed at assembly, entails gripping, moving and releasing the component in a controlled manner. Such actions are preferably carried out automatically.

One still unfulfilled need in the art is to have a manipulation device suitable for performing the above-described actions and such as to ensure the repeatability of the results, avoid damage to the component and assure correct positioning.

There are known manipulation devices operating according to various principles, including vacuum-operated ones, in an attempt to obtain the best compromise between cost, accuracy, repeatability, malleability, versatility and complexity.

In particular, vacuum manipulation devices stand out in that they are simple, economical and capable of manipulating a wide range of components, also fragile ones.

In the case of micromanipulation and microassembly (i.e. the aforesaid operations applied to microcomponents), vacuum manipulation devices are considerably affected by the problem of release, which does not always take place spontaneously when the vacuum generating system is deactivated or the action thereof decreased, since on a micrometric scale, as a result of the predominance of surface forces over volume, the microcomponents tend to remain in contact with the device, leading to an unforeseeable behaviour in the release operation and imprecise manipulation. The same problems manifest themselves in general in the case of components with geometric and structural properties such that the forces of adhesion are predominant relative to the weight force in the absence of a certain pressure difference between the inside of the manipulation device and the atmosphere.

To overcome this drawback, various expedients have been tried out in order to detach the component, for example by using a small pulse of positive pressure or else exploiting the inertial force of the component itself. Alternatively, it has been proposed to exploit an impact against a sharp edge or make use of other auxiliary instruments. With the aim of the reducing electrostatic forces, it is been proposed to use glass elements with an earthed conductive gold layer.

US 7,603,807 discloses a vacuum manipulation device provided with an assisted release system comprising a piston inside a suction tube actuated by a second double-acting piston. In particular, in order to actuate the release step, the piston is made to descend inside the tube by actuating the second piston. US 7,603,807 thus envisages a system for moving the assisted release system that is distinct from the one for generating the vacuum.

A manipulation device as described in US 7,603,807 is therefore bulkier, more complicated, more expensive and heavier than a standard vacuum manipulation device, especially considering that it is intended to be applied on the terminal member of a robot, which in this case would necessarily have to have a considerable payload, thus also constituting a constraint on the minimum size of the robot.

In this context, the technical task of the present invention is to overcome the above-mentioned drawbacks.

In particular, it is an object of the present invention to provide a vacuum manipulation device and a method for manipulating a component by means of a vacuum that is capable of releasing the components in a precise, reliable and safe manner, without excessively increasing the weight of the manipulation device or excessively complicating the structure thereof.

The stated technical task and the specified object are substantially achieved by a vacuum manipulation device and by a method for manipulating a component by means of a vacuum, each comprising the technical features set forth in one or more of the appended claims. The dependent claims correspond to possible embodiments of one of the aspects of the invention.

Additional features and advantages of the invention will be more apparent from the description that follows of several examples of vacuum manipulation devices and methods according to the invention given by way of illustration and not by way of limitation with reference to the appended figures, in which:
- figures 1 and 2 schematically illustrate a longitudinal section view of a vacuum manipulation device according to the present invention, in two different operating conditions;
- figures 3 and 4 schematically illustrate an enlarged detail of figure 1 and figure 2, respectively, in which the component C has also been added, in a gripping and release step, respectively;
- figures 5 and 6 schematically illustrate a longitudinal section view of a further embodiment of the vacuum manipulation device according to the present invention, in two different operating conditions;
- figures 7 and 8 schematically illustrate a longitudinal section view of a further embodiment of the vacuum manipulation device according to the present invention, in two different operating conditions;
- figures 9 and 10 schematically illustrate a longitudinal section view of a further embodiment of the vacuum manipulation device according to the present invention, in two different operating conditions;
- figures 11 and 12 schematically illustrate a perspective view of a component of the vacuum manipulation device illustrated in figure 1 and in figure 5, respectively.

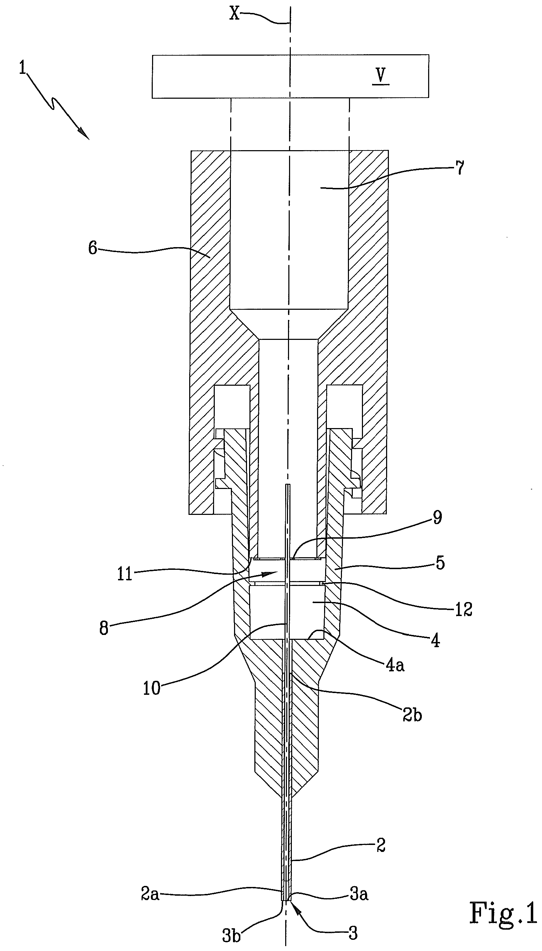

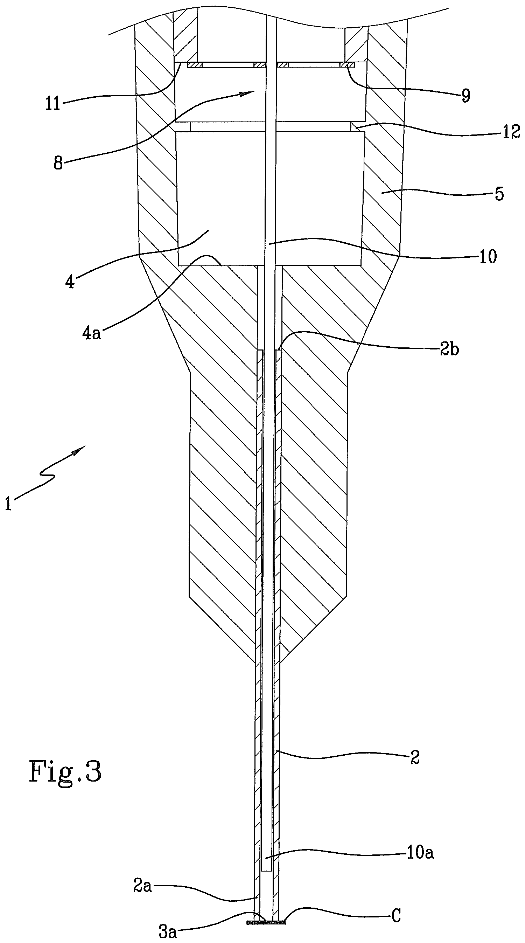

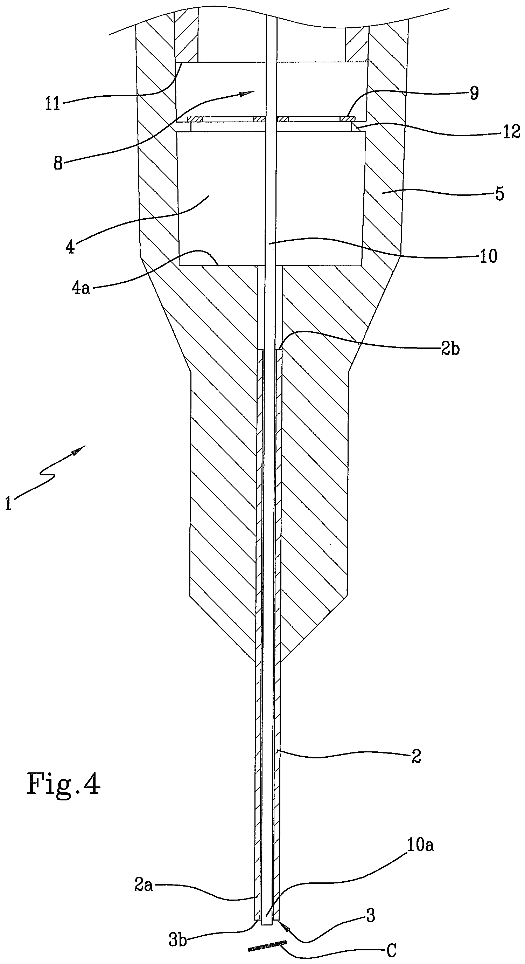

With reference to figures 1-4, 1 indicates a vacuum manipulation device. The manipulation device according to the present invention is suitable in particular for automatically or manually manipulating (gripping, moving and releasing) components C with millimetric or sub-millimetric dimensions and various geometry, that is, components with geometric and structural properties such that the forces of adhesion are predominant relative to the force of weight. By components of sub-millimetric dimensions we mean components in which at least one dimension is smaller than a millimetre. Component C has been illustrated only with reference to figure 3 and figure 4 during the gripping and release step, respectively.

The terms "lower" or "upper" or the like are used with reference to the appended figures. The manipulation device can however be used in any configuration and system of reference, such terminology being adapted to the system of reference of the appended figures by analogy. For example, the manipulation device can be mounted and/or disposed inclined relative to what is illustrated in the figures.

According to a different system of reference, the term "proximal" indicates a portion of the manipulation device 1 that is close to the component C to be manipulated whereas the term "distal" indicates a portion of the manipulation device 1 that is distant from the component C to be manipulated.

X indicates a longitudinal direction of the manipulation device which extends from a proximal (or lower) portion to a distal (or upper) portion of the manipulation device. The longitudinal direction is shown only in figure 1, but it can be analogously found in all of the embodiments that are illustrated in particular. 2 indicates a tube, preferably consisting of a tubular element with a through hole, for example having a circular cross section.

The tube 2 preferably extends along the longitudinal direction X. 3 indicates a gripper nozzle defined by a suction section 3a, for example circular, surrounded by walls 3b suitable for coming into contact with the component C.

In the case of figure 1 in which the tube 2 is envisaged, a proximal end 2a of the tube 2 is suitable for coming into contact with a component C to be manipulated, as it defines the walls 3b of the gripper nozzle 3. The proximal end 2a, which in the appended drawings corresponds to a lower end of the tube, defines a gripper nozzle 3, in which a proximal section of the through hole of the tube defines the suction section of the gripper nozzle 3.

The gripper nozzle 3, for example by means of the tube 2, is in communication with a vacuum generating system V, schematically illustrated in figure 1. With reference to the example illustrated in figure 1, the tube 2 is in communication with the vacuum generating system V. 4 indicates an internal chamber of the manipulation device that is in communication with the gripper nozzle 3 (with the tube 2, if present, in particular with a distal end 2b of the tube 2). The chamber 4 is in communication with the vacuum generating system V so that through it the gripper nozzle 3 is in also communication with the vacuum generating system V. According to the example illustrated in the figure, the chamber 4 is defined at least partially inside a body 5 of the manipulation device. Preferably the chamber 4 and/or the body 5 extend along the longitudinal direction X.

In the example in figure 1 the tube 2 projects from the body 5 in such a way that the proximal end thereof 2a (in particular the gripper nozzle 3) can come into contact with the component C to be manipulated. According to a possible embodiment, the tube 2 is solidly joined to the body 5. Alternatively, the tube 2 can be made in one piece with the body 5. In accordance with one embodiment, for example illustrated in the figures, the body 5 is suitable for being connected to a movement element, for example a terminal member of a robot, not illustrated. In this case, the body 5 is preferably suitable for being connected to an interface portion of 6 of the movement element.

If the manipulation device is connectable to a movement element, the gripper nozzle 3, in particular via the chamber 4, is advantageously placed in communication with the vacuum generating system V through the connection with the movement element. In particular, when the interface portion 6 is present, a through cavity 7 enables communication between the gripper nozzle 3 and the vacuum generating system V. In other words, according to a possible embodiment, the chamber 4 extends into the interface portion 6 via the through cavity 7, extending for example along the longitudinal direction X. 8 indicates a mechanical release system associated with the manipulation device and movable at least between a gripping position (or first position), in which it does not interfere with the gripping of the component C, and a release position (or second position), in which it causes or facilitates the detachment of the component C. Preferably, the manipulation device 8 is movable between the first and the second position and vice versa, along the longitudinal direction X.

Preferably, the mechanical release system 8 is inserted at least partially inside the manipulation device. Preferably, the mechanical release system 8 is associated with the manipulation device in such a way as to project externally from the gripper nozzle 3 when it has reached the release position. If the tube 2 is envisaged as in figure 1, the mechanical release system 8 is inserted at least partially inside the tube 2. The mechanical release system 8 is associated with the manipulation device so as to remain free to move inside it between the gripping position (or first position) and the release position (or second position).

Figures 1-4 illustrate a possible embodiment of the mechanical release system 8 comprising a transverse extension 9, for example realized by means of a perforated disk. The mechanical release system 8 further comprises a needle 10 solidly joined to the transverse extension 9. The needle 10 has a smaller cross section than the suction section 3a of the gripper nozzle 3, for example the internal section of the tube 2, if present. In the case of a needle 10 with a circular cross section and a gripper nozzle 3 with a circular suction section 3a, the needle 10 has a smaller diameter than the suction section 3a.

Preferably, the needle 10 is disposed and moves along the longitudinal direction X between the first and the second position, and vice versa.

The difference between the dimensions of the needle 10 and of the gripping section 3a (or of the tube 2 if present) is such as to maintain a gap to permit the passage of air following the activation of the vacuum generating system V.

With reference to the embodiment in figure 1, the transverse extension 9 is solidly joined, preferably centrally and perpendicularly, to the needle 10. Preferably, the needle 10 is inserted at least partially inside the tube 2 and the transverse extension 9 is housed inside the chamber 4.

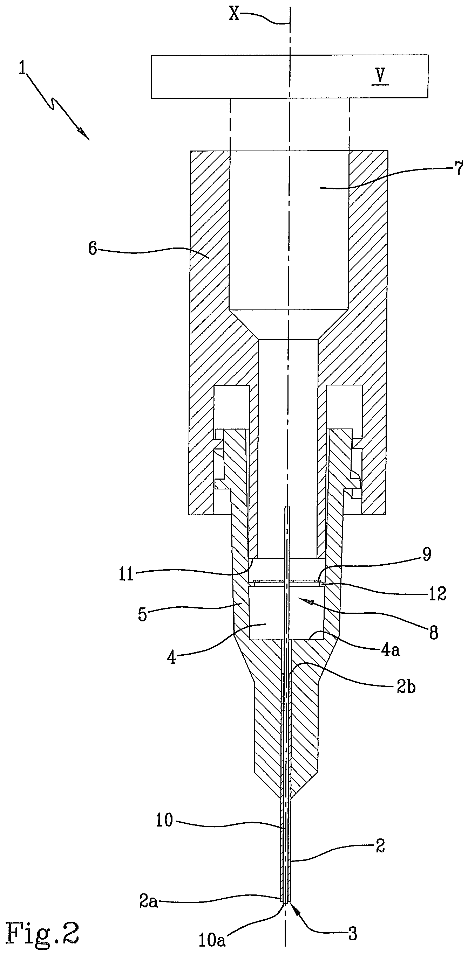

In the second position (figures 2 and 4), corresponding to the step wherein a component is released by the manipulation device, the mechanical release system 8 has a release portion that projects slightly from the suction section 3a of the gripper nozzle 3 (for example, from the tube if present). In particular, the needle 10 has a release portion 10a corresponding to a lower (or proximal) portion of the needle and designed to project slightly from the suction section 3a of the gripper nozzle 3 (for example, from the tube if present) when the needle reaches the release position.

In the first position (figure 1), corresponding to the step wherein a component is gripped and moved by the manipulation device, the mechanical release system 8 does not project externally from the suction section 3a (from the tube 2, if present). The release portion thereof is disposed inside the manipulation device (the tube 2, if present). In particular, the needle 10 has its lower (or proximal) portion disposed inside the manipulation device (the tube 2, if present). In this condition the gripper nozzle 3 is free and can hold and move the component C by means of the suction obtained thanks to the activation of the vacuum generating system V, which generates a pressure difference between the inside and outside of the manipulation device.

The mechanical release system 8 is designed to be moved from the second position (or release position) to the first position (or gripping position) through activation of the vacuum generating system V, which generates a negative pressure such as to suck the mechanical release system 8 into the manipulation device.

The movement of the mechanical release system 8 from the release position to the gripping position is opposed by a return force pulling it toward the release position, and which, in the example in figure 1, is represented by the force of gravity acting upon the mechanical release system.

In particular, the release system 8 is designed to ascend along the chamber 4 inside the manipulation device by virtue of the activation of the vacuum generating system V in opposition to the return force.

The movement of the mechanical release system generated by the vacuum generating system in opposition to the return force occurs along the longitudinal direction X.

In other words, the same principle of actuation of the gripping (the vacuum generating system) of the component C moves the mechanical release system 8 from the release position to the gripping position.

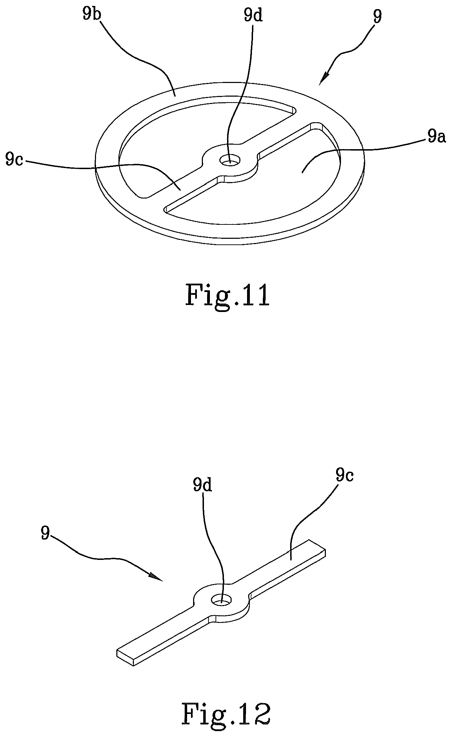

An example of a transverse extension 9 realized by means of a perforated disk, corresponding to the one used in figures 1-4, is illustrated in figure 11. 9a indicates holes having the purpose of enabling communication between the vacuum generating system V and the gripper nozzle 3, thus permitting the passage of air with a consequent adjustment of pressure. 9b indicates a peripheral portion and 9c indicates a transverse portion suitable for being solidly joined to the needle 10, for example via a hole 9d.

In accordance with a possible embodiment, for example illustrated in figure 1, the mechanical release system 8 is designed to be moved from the gripping position to the release position by virtue of the return force which prevails over the suction force following a reduction or elimination of the pressure difference between the inside and outside of the manipulation device operated by the vacuum generating system V.

In other words, a return force (constant or variable) acts upon the mechanical release system and comprises at least a component with a direction opposite that of at least a component of the force exerted on mechanical release system through the activation of the vacuum generating system, if present. The direction of the resultant of these two opposing forces acting upon the mechanical release system determines the direction of movement of the mechanical release system.

The passage of the mechanical release system from one position to another and vice versa takes place automatically depending on the status of the vacuum generating system (activation, deactivation/decrease in the negative pressure) without requiring specific activation systems.

With reference to the embodiment in figure 1, the return force is defined by the force of gravity acting on the mechanical release system 8. In other words, the mechanical release system 8 is designed to be moved from the gripping position to the release position under the force of its weight, which prevails over the suction force following the deactivation of the vacuum generating system V or reduction of the pressure difference between the inside and outside of the manipulation device. In particular the release system 8 is designed to descend along the chamber 4 inside the manipulation device as a result of the reduction of the suction force that is generated by acting upon the vacuum generating system V and decreasing the negative pressure or eliminating it completely (in the event of deactivation of the vacuum generating system). The movement (or descent) of the mechanical release system 8 occurs along the longitudinal direction X. Consequently, at the end of the descent, the needle 10 projects slightly from the suction section 3a (from the tube 2, if present).

In accordance with a possible embodiment, the manipulation device according to the present invention comprises an upper (or distal) limit stop 11 for the mechanical release system 8. The upper limit stop can be realized, for example, by means of a shoulder disposed inside the chamber 4. In particular, in the case of the interface portion 6, the shoulder can be realized by a lower (or proximal) wall of the interface portion 6 disposed inside the chamber 4. The upper limit stop prevents the mechanical release system 8 from being sucked into the manipulation device.

In accordance with a possible embodiment, the manipulation device according to the present invention comprises a lower limit stop 12 for the mechanical release system 8. The lower limit stop can be realized, for example, by means of a shoulder disposed inside the chamber 4. Alternatively, the lower limit stop can be realized by means of a base 4a of the chamber itself. The lower limit stop defines the entity of the release portion of the mechanical release system 8. With reference to the example illustrated in figure 1, the lower limit stop defines by how much the needle 10 will project from the gripper nozzle 3 when it reaches the release position.

In the example illustrated in figures 1-4, the transverse extension 9 plays the role of a stop element abutting against the upper limit stop 11 and against the lower limit stop 12.

During use, the manipulation device as previously described envisages the activation of the vacuum generating system V in order to grip and move the component C. The vacuum generating system V causes a pressure difference between the inside of the manipulation device and the atmosphere (negative pressure). The mechanical release system 8, initially in the release position, is sucked into the manipulation device in opposition to the return force, which would tend to bring it back into the release position. In particular, the needle 10 is pulled back into the device (in particular into the tube 2 if present).

With reference to the arrangement illustrated in the figures, the mechanical release system 8 rises. Consequently, the needle 10 rises, disappearing into the device (in particular into the tube 2 if present - figure 1). This enables the component C to be gripped, similarly to what occurs in the absence of the mechanical release system 8. According to the appended example, the transverse extension 9 (the perforated disk) has the task of preventing the needle from being sucked into the circuit in the gripping position and falling out of the tube in the release position. Optionally, the transverse extension 9 (the perforated disk) can contribute to providing a weight such as to render the weight force of the mechanical release system predominant relative to the forces of adhesion between the disk and the upper limit stop. If the upper limit stop 11 is provided, the mechanical release system will not be completely sucked in. In particular, the upper limit stop 11 is designed to interfere with the extension 9 (the perforated disk), which goes to abut against the lower shoulder of the interface portion 6, if present.

When a release is required, the vacuum generating system V is deactivated, or else the pressure difference between the inside and outside of the manipulation device is reduced. Once the suction force disappears or decreases, the return force prevails over the suction force and the mechanical release system reaches the release position (figure 2). In particular, with reference to the embodiment in figure 1, the mechanical release system 8 falls under the effect of the force of gravity. Preferably, the transverse extension 9 goes to abut against the lower limit stop 12 fashioned inside the body 5 and the descent of the needle 10 is blocked so as to ensure a certain projection of the release portion 10a from the gripper nozzle 3 (in particular relative to the tube 2 if present).

Upon descending, the needle 10 comes into contact with the component C, striking it and favouring its detachment from the manipulation device.

In particular, the release system 8 is designed to pass from the release position to the gripping position and vice versa (ascend and descend inside the manipulation device) based on the pressure difference between the inside and outside of the manipulation device.

The present invention further relates to a method for manipulating a component C by means of a vacuum, in particular by means of a vacuum manipulation device 1 as previously described. The method envisages activating the vacuum generating system V so as to grip and move the component and move the mechanical release system 8 from the release position to the gripping position in opposition to a return force. The method further envisages deactivating the vacuum generating system V or decreasing the pressure difference between the inside of the manipulation device and the outside so as to move the mechanical release system 8 from the gripping position to the release position by virtue of the return force, thus releasing the component C.

If applied in a device analogous or similar to the one illustrated in figures 1-4, the method according to the present invention envisages that the return force is determined by the force of gravity.

The presence of the mechanical release system enables detachment of the microcomponent even when the force of gravity of the object would not be capable of overcoming the forces of adhesion. The mechanical release system ensures the release and renders the manipulation device reliable without any additional actuation systems, since it is based solely on suction pressure and on a return force acting constantly on the mechanical release system (for example the force of gravity) and/or following the movement thereof from the release position to the gripping position (for example a passive element, in particular an elastic element).

Structural and/or functional variants can be envisaged as alternatives to what has been described and illustrated. For example, the perforated disk could be replaced by a flat element comprising apertures (for example, disk shaped as previously described, or of a different shape and/or size) or by an element of any shape and/or size. Alternatively, the element need not be perforated if the passage of air is in any case permitted, for example thanks to the shape and/or reduced size of the element or thanks to external channels and/or grooves fashioned in the body of the manipulation device.

In general, the release system 8 is designed to ascend and descend inside the manipulation device as a direct result of the activation/deactivation of the vacuum generating system V or a reduction of the pressure difference between the inside and outside of the manipulation device.

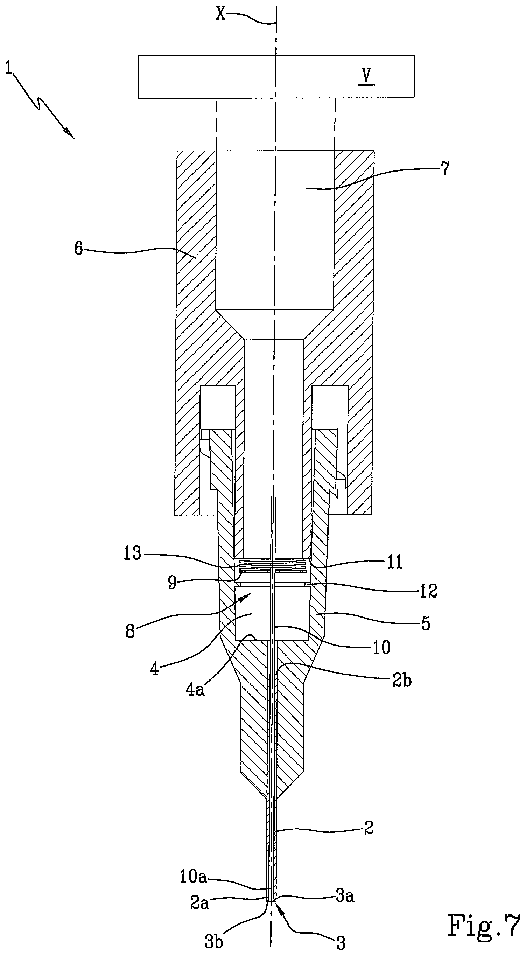

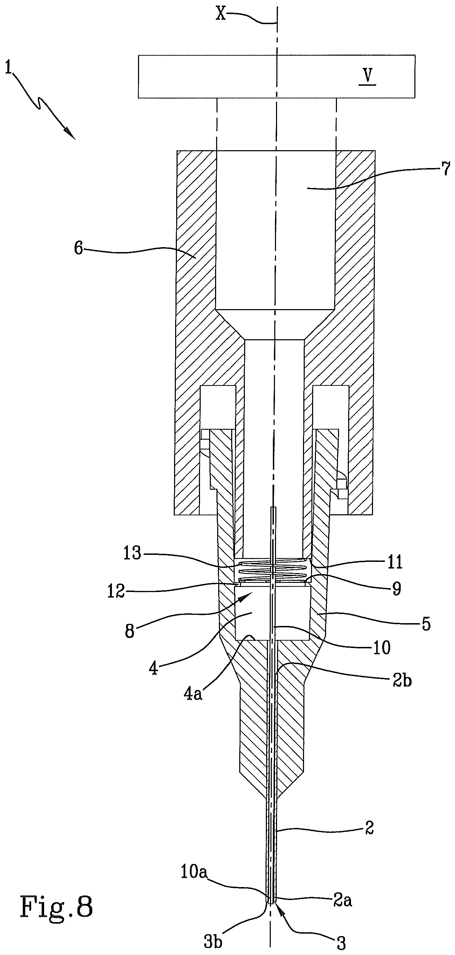

A further embodiment can envisage a passive auxiliary element, for example a spring, such as to replace or support the action of the force of gravity on the release system 8 and ensure or favour the exit of the release portion 10a of the needle 10 when the component's release is required. Incorporating a passive element of this kind can be useful above all if the manipulation device is intended to operate in a configuration other than the vertical one indicated in the appended figures. Figures 7 and 8 schematically illustrate a possible embodiment comprising an auxiliary element, for example a spring 13. According to the illustrated embodiment, the passive element is designed to be compressed under the action of the vacuum, enabling the system to reach the gripping position, and to be extended upon deactivation of the vacuum or a reduction of the pressure difference between the inside and the outside, so as to push the needle out of the gripper nozzle and reach the release position. The position, configuration and operating mode of the spring (or of the passive element in general) can nonetheless vary compared to what has been described and illustrated.

If applied in a device analogous or similar to the one illustrated in figures 7-8, the method according to the present invention envisages that the return force comprises the force of gravity and/or an elastic return force, which in some cases could render the force of gravity negligible. Irrespective of the presence, shape and size of the element performing the functions of the transverse extension 9, the mechanical release system comprises a needle 10 having a diameter that is smaller than the internal diameter of the tube 2 (or, in general, of the suction section 3a) or in any case a smaller cross section than the opening of the through hole 2 (or, in general, of the suction section 3a). The needle 10 is inserted at least partially inside the device (in particular, inside the tube 2 if present) and comprises the release portion 10a.

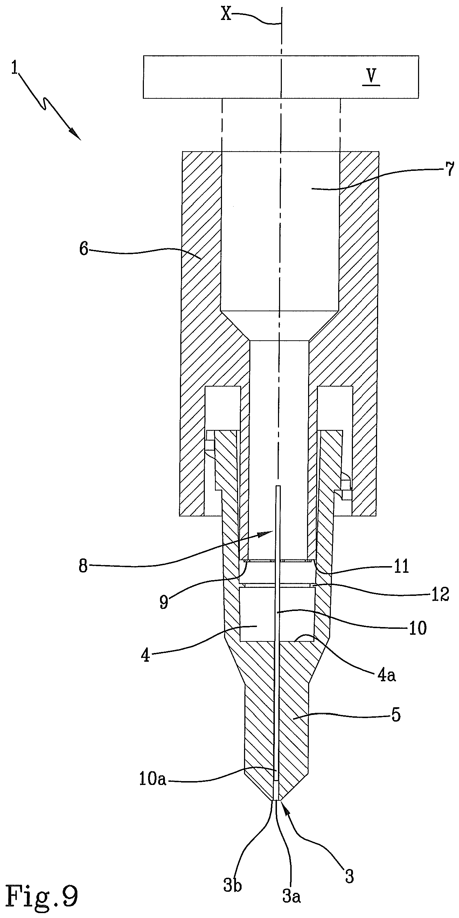

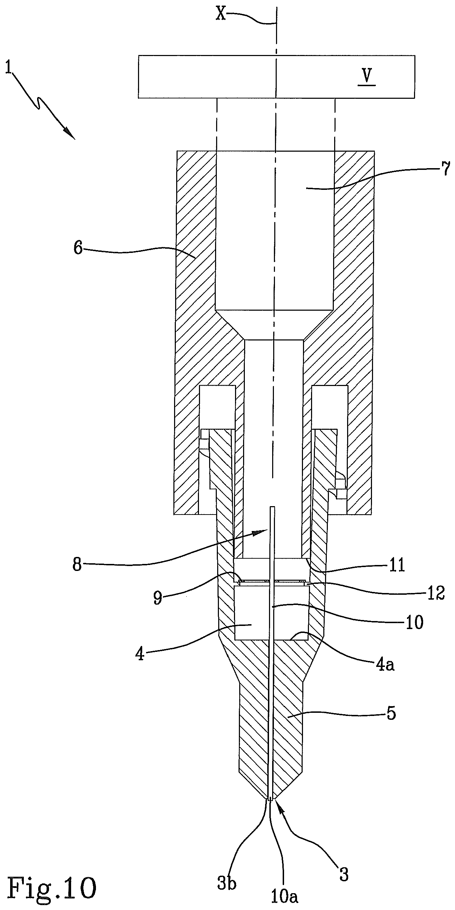

According to another possible embodiment, the tube 2 is absent and the body 5 has a through hole, so that a proximal end thereof comes directly into contact with the component C to be manipulated, itself forming the gripper nozzle 3. An example of this embodiment is illustrated in figures 9 and 10, in which the walls 3b of the gripper nozzle are defined by the walls of the proximal end of the body 5.

In cases in which the interface 6 is provided, the latter can be of a shape and size that are different from the ones described and illustrated. In some cases the body 5 can be designed to be connected directly to the movement element without an interface. In other cases no interface is provided, for example in the event that the manipulation device is intended for manual use.

The embodiments described with reference to a transverse extension 9, for example having the form of a perforated disk, can be considered to refer in general to the presence of a stop element of any shape and size serving to prevent the mechanical release system 8 from being sucked into or falling out of the manipulation device. The stop element can also optionally be designed to perform a ballast function.

Alternatively, the ballast function can be performed by an additional element other than the stop element, for example, again in the form of a transverse extension.

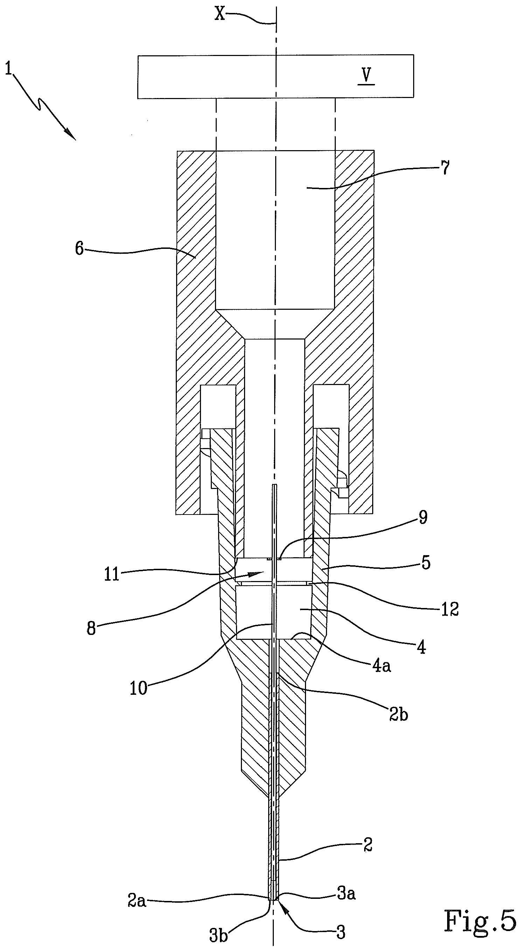

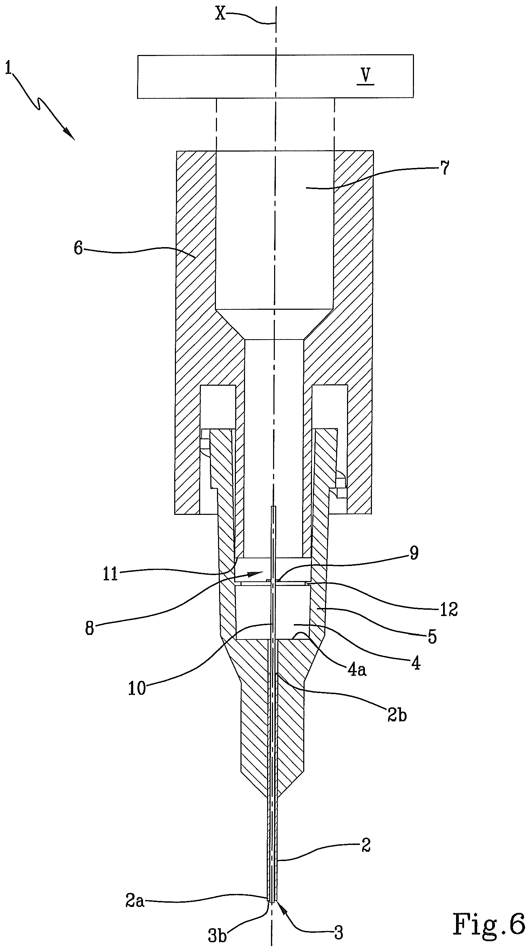

As an alternative to the perforated disk, the transverse extension 9 (or stop element) can be realized by means of a transverse bar as illustrated, for example, in figures 5, 6 and 12. Figure 12 illustrates a detail of this possible embodiment in which the peripheral portion 9b of the embodiment in figure 11 is lacking. 9c indicates a transverse portion designed to be solidly joined to the needle 10, for example via a hole 9d.

Alternatively to what has been described and illustrated, the mechanical release system 8 can comprise solely the needle 10 having a weight such as enable the descent thereof or in general the passage from the gripping position to the release position, in particular as a result of the force of gravity acting upon it. As an alternative to the transverse extension 9 or stop element cooperating with the upper and lower limit stops, different means can be provided in order to hold the needle inside the manipulation device, for example inside the body 5.

## Claims

1. A vacuum manipulation device (1) comprising a gripper nozzle (3) in communication with a vacuum generating system (V) for gripping a component (C) by suction in a gripping section (3a) of the gripper nozzle itself and a mechanical release system (8) inserted at least partially inside said manipulation device and movable from a release position, in which a release portion (10a) of the mechanical release system (8) projects externally from the gripper nozzle (3), and a gripping position, in which said release portion (10a) returns into the manipulation device relative to the gripping section (3a), **characterized in that** said mechanical release system (8) is designed to be moved from the release position to the gripping position through activation of the vacuum generating system (V), which sucks in said mechanical release system (8) in opposition to a return force pulling it toward the release position and **in that** said mechanical release system (8) is designed to be moved from the gripping position to the release position by virtue of said return force following a reduction or elimination of the pressure difference between the inside and outside of the manipulation device generated by the vacuum generating system (V).

2. The vacuum manipulation device (1) according to claim 1, wherein the release system (8) is designed to ascend and descend inside the manipulation device based on the pressure difference between the inside and outside of the manipulation device.

3. The vacuum manipulation device (1) according to claim 1 or 2, wherein said return force pulling the mechanical release system (8) toward the release position is determined by the force of gravity acting on the mechanical release system (8).

4. The vacuum manipulation device (1) according to one or more of the preceding claims, wherein the mechanical release system (8) comprises a needle (10) designed to be moved from the release position to the gripping position through activation of the vacuum generating system (V), which sucks in said needle (10) in opposition to the return force pulling it toward the release position and wherein said needle (10) is designed to be moved from the gripping position to the release position by virtue of said return force following a reduction or elimination of the pressure difference between the inside and outside of the manipulation device generated by the vacuum generating system (V), wherein preferably said needle (10) comprises said release portion (10a).

5. The vacuum manipulation device (1) according to claim 4, comprising a tube (2) defining said gripper nozzle (3), wherein said needle (10) is inserted at least partially inside the tube (2).

6. The vacuum manipulation device (1) according to one or more of claims 4-5, wherein the mechanical release system (8) comprises a stop element or a transverse extension (9) which is solidly joined to the needle (10) and designed to retain the needle (10) inside the manipulation device.

7. The vacuum manipulation device (1) according to claim 6, wherein the stop element or transverse extension (9) is a perforated disk solidly joined, preferably centrally and perpendicularly, to the needle (10).

8. The vacuum manipulation device (1) according to claim 6, wherein the stop element or transverse extension (9) is a transverse bar solidly joined, preferably centrally and perpendicularly, to the needle (10).

9. The vacuum manipulation device (1) according to one or more of claims 6-8, wherein the stop element or transverse extension (9) is inserted inside a chamber (4) of the manipulation device (1) in communication with said vacuum generating system (V).

10. The vacuum manipulation device (1) according to one or more of the preceding claims, comprising a chamber (4) in communication with said vacuum generating system (V) and designed to at least partially receive at least said mechanical release system (8).

11. The vacuum manipulation device (1) according to one or more of the preceding claims, comprising an upper limit stop (11) for the mechanical release system (8), for example a shoulder disposed inside a chamber (4) of the manipulation device (1).

12. The vacuum manipulation device (1) according to claim 11, wherein said upper limit stop (11) is formed by a lower wall of an interface portion (6) disposed inside a chamber (4) of the manipulation device (1) in communication with said vacuum generating system (V).

13. The vacuum manipulation device (1) according to one or more of the preceding claims, comprising a lower limit stop (12) for the mechanical release system (8), for example a shoulder disposed inside a chamber (4) of the manipulation device in communication with said vacuum generating system (V).

14. The vacuum manipulation device (1) according to one or more of the preceding claims, comprising a passive auxiliary element such as to replace or support the action of the force of gravity on the release system (8) and assure or favour the coming out of the release portion (10a) when it is required to release the component, preferably wherein said passive auxiliary element comprises a spring (13) or an elastic element.

15. A method for manipulating a component by means of a vacuum manipulation device (1) according to one or more of the preceding claims, said manipulation method comprising:
activating said vacuum generating system (V) so as to grip and move the component (C) and move said mechanical release system (8) from the release position to the gripping position, wherein said mechanical release system (8) is sucked into the manipulation device in opposition to a return force pulling it toward the release position,
deactivating said vacuum generating system (V) or decreasing the pressure difference between the inside and outside of the manipulation device so as to move said mechanical release system (8) from the gripping position to the release position by virtue of said return force, thus releasing the component.

16. The method for manipulating a component according to claim 15, wherein said return force comprises the force of gravity and/or an elastic return force.

## Patentansprüche

1. Vakuummanipulationsvorrichtung (1) umfassend eine Greiferdüse (3) in Verbindung mit einem Vakuumerzeugungssystem (V) für das Greifen einer Komponente (C) durch Absaugen in einem Greifabschnitt (3a) der Greiferdüse selbst und ein mechanisches Entriegelungssystem (8), das zumindest teilweise im Inneren der Manipulationsvorrichtung eingesetzt ist und von einer Entriegelungsposition, in der ein Entriegelungsabschnitt (10a) des mechanischen Entriegelungssystems (8) nach außen von der Greiferdüse (3) herausragt, zu einer Greifposition, in der der Entriegelungsabschnitt (10a) in die Manipulationsvorrichtung in Bezug auf den Greifabschnitt (3a) zurückkehrt, beweglich ist, **dadurch gekennzeichnet, dass**
das mechanische Entriegelungssystem (8) ausgelegt ist, um von der Entriegelungsposition zur Greifposition durch die Aktivierung des Vakuumerzeugungssystems (V) bewegt zu werden, das im mechanischen Entriegelungssystem (8) entgegen einer Rückstellkraft saugt, wobei sie es in Richtung der Entriegelungsposition zieht, und dass
das mechanische Entriegelungssystem (8) so ausgelegt ist, um von der Greifposition zur Entriegelungsposition aufgrund der Rückstellkraft infolge einer Reduzierung oder Eliminierung der Druckdifferenz zwischen der Innenseite und Außenseite der Manipulationsvorrichtung, die durch das Vakuumerzeugungssystem (V) erzeugt wird, bewegt zu werden.

2. Vakuummanipulationsvorrichtung (1) nach Anspruch 1, wobei das Entriegelungssystem (8) ausgelegt ist, um im Inneren der Manipulationsvorrichtung basierend auf der Druckdifferenz zwischen der Innenseite und der Außenseite der Manipulationsvorrichtung aufzusteigen und abzusteigen.

3. Vakuummanipulationsvorrichtung (1) nach Anspruch 1 oder 2, wobei die Rückstellkraft, die das mechanische Entriegelungssystem (8) in Richtung der Entriegelungsposition zieht, durch die Schwerkraft, die auf das mechanische Entriegelungssystem (8) wirkt, bestimmt wird.

4. Vakuummanipulationsvorrichtung (1) nach einem oder mehreren der vorhergehenden Ansprüche, wobei das mechanische Entriegelungssystem (8) eine Nadel (10) umfasst, ausgelegt, um von der Entriegelungsposition zur Greifposition durch Aktivierung des Vakuumerzeugungssystems (V) bewegt zu werden, das in der Nadel (10) entgegen der Rückstellkraft saugt, die sie in Richtung der Entriegelungsposition zieht, und wobei die Nadel (10) ausgelegt ist, um von der Greifposition zur Entriegelungsposition aufgrund der Rückstellkraft infolge einer Reduzierung oder Eliminierung der Druckdifferenz zwischen der Innenseite und Außenseite der Manipulationsvorrichtung bewegt zu werden, die durch das Vakuumerzeugungssystem (V) erzeugt wird, wobei vorzugsweise die Nadel (10) den Entriegelungsabschnitt (10a) umfasst.

5. Vakuummanipulationsvorrichtung (1) nach Anspruch 4, umfassend ein Rohr (2), das die Greiferdüse (3) bestimmt, wobei die Nadel (10) zumindest teilweise innerhalb des Rohrs (2) eingesetzt ist.

6. Vakuummanipulationsvorrichtung (1) nach einem oder mehreren der Ansprüche 4-5, wobei das mechanische Entriegelungssystem (8) ein Anschlagelement oder eine Quererstreckung (9) umfasst, die fest an der Nadel (10) verbunden ist und ausgelegt, um die Nadel (10) innerhalb der Manipulationsvorrichtung zu halten.

7. Vakuummanipulationsvorrichtung (1) nach Anspruch 6, wobei das Anschlagelement oder die Quererstreckung (9) eine fest verbundene Lochscheibe, vorzugsweise mittig und senkrecht zu der Nadel (10) ist.

8. Vakuummanipulationsvorrichtung (1) nach Anspruch 6, wobei das Anschlagelement oder die Quererstreckung (9) eine fest verbundene Querstange, vorzugsweise mittig und senkrecht zur Nadel (10) ist.

9. Vakuummanipulationsvorrichtung (1) nach einem oder mehreren der Ansprüche 6-8, wobei das Anschlagelement oder die Quererstreckung (9) in einer Kammer (4) der Manipulationsvorrichtung (1) in Verbindung mit dem Vakuumerzeugungssystem (V) eingesetzt ist.

10. Vakuummanipulationsvorrichtung (1) nach einem oder mehreren der vorhergehenden Ansprüche, umfassend eine Kammer (4) in Verbindung mit dem Vakuumerzeugungssystem (V) und ausgelegt, um zumindest teilweise mindestens das mechanischen Entriegelungssystem (8) aufzunehmen.

11. Vakuummanipulationsvorrichtung (1) nach einem oder mehreren der vorhergehenden Ansprüche, umfassend einen oberen Endanschlag (11) für das mechanische Entriegelungssystem (8), beispielsweise eine Schulter, die innerhalb einer Kammer (4) der Manipulationsvorrichtung (1) angeordnet ist.

12. Vakuummanipulationsvorrichtung (1) nach Anspruch 11, wobei der obere Endanschlag (11) durch eine untere Wand eines Schnittstellenabschnitts (6) ausgebildet ist, der innerhalb einer Kammer (4) der Manipulationsvorrichtung (1) in Verbindung mit dem Vakuumerzeugungssystem (V) angeordnet ist.

13. Vakuummanipulationsvorrichtung (1) nach einem oder mehreren der vorhergehenden Ansprüche, umfassend einen unteren Endanschlag (12) für das mechanische Entriegelungssystem (8), beispielsweise eine Schulter, die innerhalb einer Kammer (4) der Manipulationsvorrichtung in Verbindung mit dem Vakuumerzeugungssystem (V) angeordnet ist.

14. Vakuummanipulationsvorrichtung (1) nach einem oder mehreren der vorhergehenden Ansprüche, umfassend ein passives Hilfselement, um die Wirkung der Schwerkraft auf das Entriegelungssystem (8) zu ersetzen oder unterstützen und das Herauskommen des Entriegelungsabschnitts (10a) zu sichern oder zu begünstigen, wenn es erforderlich ist, die Komponente zu entriegeln, vorzugsweise wobei das passive Hilfselement eine Feder (13) oder ein elastisches Element umfasst.

15. Verfahren zur Manipulation einer Komponente mittels einer Vakuummanipulationsvorrichtung (1) nach einem oder mehreren der vorhergehenden Ansprüche, wobei das Manipulationsverfahren umfasst:
Aktivieren des Vakuumerzeugungssystems (V), um die Komponente (C) zu greifen und zu bewegen und das mechanische Entriegelungssystem (8) von der Entriegelungsposition zur Greifposition zu bewegen, wobei das mechanische Entriegelungssystem (8) in die Manipulationsvorrichtung entgegen einer Rückstellkraft angesaugt wird, die es in Richtung auf die Entriegelungsposition zieht,
Deaktivieren des Vakuumerzeugungssystems (V) oder Senkung der Druckdifferenz zwischen der Innenseite und der Außenseite der Manipulationsvorrichtung, um das mechanische Entriegelungssystem (8) von der Greifposition zur Entriegelungsposition aufgrund der Rückstellkraft zu bewegen, sodass die Komponente entriegelt wird.

16. Verfahren zur Manipulation einer Komponente nach Anspruch 15, wobei die Rückstellkraft die Schwerkraft und/oder eine elastische Rückstellkraft umfasst.

## Revendications

1. Dispositif de manipulation sous vide (1) comprenant une buse de préhension (3) en communication avec un système de génération du vide (V) pour saisir un composant (C) par aspiration dans une section de préhension (3a) de la buse de préhension elle-même et un système de relâchement mécanique (8) inséré au moins partiellement à l'intérieur dudit dispositif de manipulation et mobile d'une position de relâchement, dans laquelle une partie de relâchement (10a) du système de relâchement mécanique (8) dépasse à l'extérieur de la buse de préhension (3), et une position de préhension, dans laquelle ladite partie de relâchement (10a) retourne dans le dispositif de manipulation par rapport à la section de préhension (3a), **caractérisé en ce que**
ledit système de relâchement mécanique (8) est conçu pour être déplacé de la position de relâchement à la position de préhension grâce à l'activation du système de génération du vide (V) qui aspire dans ledit système de relâchement mécanique (8) en opposition à une force de rappel le poussant vers la position de relâchement et **en ce que**
ledit système de relâchement mécanique (8) est conçu pour être déplacé de la position de préhension à la position de relâchement sous l'effet de ladite force de rappel suite à une réduction ou à l'élimination de la différence de pression, entre l'intérieur et l'extérieur du dispositif de manipulation, générée par le système de génération de vide (V).

2. Dispositif de manipulation sous vide (1) selon la revendication 1, dans lequel le système de relâchement (8) est conçu pour monter et descendre à l'intérieur du dispositif de manipulation en fonction de la différence de pression entre l'intérieur et l'extérieur du dispositif de manipulation.

3. Dispositif de manipulation sous vide (1) selon la revendication 1 ou 2, dans lequel ladite force de rappel tirant le système de relâchement mécanique (8) vers la position de relâchement est déterminée par la force de gravité agissant sur le système de relâchement mécanique (8).

4. Dispositif de manipulation sous vide (1) selon l'une ou plusieurs des revendications précédentes, dans lequel le système de relâchement mécanique (8) comprend une aiguille (10) conçue pour être déplacée de la position de relâchement à la position de préhension grâce à l'activation du système de génération du vide (V) qui aspire dans ladite aiguille (10) en opposition à la force de rappel la poussant vers la position de relâchement et dans lequel ladite aiguille (10) est conçue pour être déplacée de la position de préhension à la position de relâchement sous l'effet de ladite force de retour suite à une réduction ou à l'élimination de la différence de pression, entre l'intérieur et l'extérieur du dispositif de manipulation, générée par le système de génération du vide (V), dans lequel, de préférence, ladite aiguille (10) comprend ladite partie de relâchement (10a).

5. Dispositif de manipulation sous vide (1) selon la revendication 4, comprenant un tube (2) définissant ladite buse de préhension (3), dans lequel ladite aiguille (10) est insérée au moins partiellement à l'intérieur du tube (2).

6. Dispositif de manipulation sous vide (1) selon l'une ou plusieurs des revendications 4 et 5, dans lequel le système de relâchement mécanique (8) comprend un élément d'arrêt ou une extension transversale (9) étant solidement reliée à l'aiguille (10) et conçue pour retenir l'aiguille (10) à l'intérieur du dispositif de manipulation.

7. Dispositif de manipulation sous vide (1) selon la revendication 6, dans lequel l'élément d'arrêt ou l'extension transversale (9) est un disque perforé solidement relié, de préférence centralement et perpendiculairement, à l'aiguille (10).

8. Dispositif de manipulation sous vide (1) selon la revendication 6, dans lequel l'élément d'arrêt ou l'extension transversale (9) est une barre transversale solidement reliée, de préférence centralement et perpendiculairement, à l'aiguille (10).

9. Dispositif de manipulation sous vide (1) selon l'une ou plusieurs des revendications de 6 à 8, dans lequel l'élément d'arrêt ou l'extension transversale (9) est inséré (e) à l'intérieur d'une chambre (4) du dispositif de manipulation (1) en communication avec ledit système de génération du vide (V).

10. Dispositif de manipulation sous vide (1) selon l'une ou plusieurs des revendications précédentes, comprenant une chambre (4) en communication avec ledit système de génération du vide (V) et conçue pour au moins partiellement recevoir au moins ledit système de relâchement mécanique (8).

11. Dispositif de manipulation sous vide (1) selon l'une ou plusieurs des revendications précédentes, comprenant une butée de fin de course supérieure (11) pour le système de relâchement mécanique (8), par exemple un épaulement disposé à l'intérieur d'une chambre (4) du dispositif de manipulation (1).

12. Dispositif de manipulation sous vide (1) selon la revendication 11, dans lequel ladite butée de fin de course supérieure l'élément d'arrêt (11) est formée par une paroi inférieure d'une partie d'interface (6) disposée à l'intérieur d'une chambre (4) du dispositif de manipulation (1) en communication avec ledit système de génération du vide (V).

13. Dispositif de manipulation sous vide (1) selon l'une ou plusieurs des revendications précédentes, comprenant une butée de fin de course inférieure (12) pour le système de relâchement mécanique (8), par exemple un épaulement disposé à l'intérieur d'une chambre (4) du dispositif de manipulation en communication avec le système de génération du vide (V).

14. Dispositif de manipulation sous vide (1) selon l'une ou plusieurs des revendications précédentes, comprenant un élément auxiliaire passif de sorte à remplacer ou supporter l'action de la force de gravité sur le système de relâchement (8) et assurer ou favoriser la sortie de la partie de relâchement (10a) lorsqu'il est nécessaire de relâcher le composant, de préférence dans lequel ledit élément auxiliaire passif comprend un ressort (13) ou un élément élastique.

15. Procédé de manipulation d'un composant au moyen d'un dispositif de manipulation sous vide (1) selon l'une ou plusieurs des revendications précédentes, ledit procédé de manipulation comprenant :
l'activation dudit système de génération du vide (V) de manière à saisir et à déplacer le composant (C) et à déplacer ledit système de relâchement mécanique (8) de la position de relâchement à la position de préhension, dans lequel ledit système de relâchement mécanique (8) est aspiré dans le dispositif de manipulation en opposition à une force de rappel le poussant vers la position de relâchement,
la désactivation dudit système de génération du vide (V) ou la diminution de la différence de pression entre l'intérieur et l'extérieur du dispositif de manipulation de manière à déplacer ledit système de relâchement mécanique (8) de la position de préhension à la position de relâchement sous l'effet de ladite force de rappel, relâchant ainsi le composant.

16. Procédé de manipulation d'un composant selon la revendication 15, dans lequel ladite force de rappel comprend la force de gravité et/ou une force de rappel élastique.
